# EUROPEAN PATENT SPECIFICATION

(11) **EP 3 459 892 B1**
(45) Date of publication and mention of the grant of the patent: **21.10.2020**
(21) Application number: 18191225.4
(22) Date of filing: 28.08.2018
(51) Int. Cl.: B66B 5/00

(54) **ELEVATOR HOISTWAY INSPECTION DEVICE**
AUFZUGSSCHACHTINSPEKTIONSVORRICHTUNG
DISPOSITIF D'INSPECTION DE CAGE D'ASCENSEUR

(30) Priority: 28.08.2017 US 201715687833
(43) Date of publication of application: 27.03.2019
(73) Proprietor: Otis Elevator Company, Farmington, Connecticut 06032 (US)
(72) Inventor: MIYAJIMA, Hiromitsu, Sanbu-gun, Chiba 289-1693 (JP); YAMADA, Atsushi, Sanbu-gun, Chiba 289-1693 (JP)
(74) Representative: Dehns

(56) References cited:
- WO-A1-2009/051587
- WO-A1-2016/096698
- JP-A- 2008 001 494
- JP-A- 2011 098 806
- JP-A- 2015 030 604

## Description

### BACKGROUND

This invention generally relates to an elevator system. More particularly, this invention relates to a hoistway inspection device for an elevator system.

There are various times and reasons for inspecting one or more conditions within an elevator hoistway. For example, inspection is necessary for restarting the elevator system after an earthquake. In most situations, a mechanic visually inspects the hoistway by moving to several floors of a building and opening the hall door at each floor to check the conditions inside the hoistway. Such inspection is time consuming and it is a matter of concern when it is necessary to inspect a hoistway of a high-rise building.

WO 2009/051587 disclosing the preamble of claim 1, discloses an elevator hoistway inspection device for inspecting an elevator hoistway using an imaging device. An elongated suspension member selectively winded up or unwinded by a reel of a payout mechanism moves the imaging device to a desired position within the elevator hoistway. This device may be effective in a low-rise building. However, in a high-rise building having a height of about two hundred meters, for example, winding or unwinding of a long suspension member would cause the suspension member to interfere with other components in the elevator hoistway. JP2011098806 also discloses an elevator hoistway inspection device.

In view of the above and other considerations, there is a need for providing a hoistway inspection device which is suitable for high-rise buildings.

### BRIEF SUMMARY

According to one embodiment of the invention, an elevator hoistway inspection device is provided which comprises a guiding device which extends along an elevator hoistway and a camera unit configured for obtaining image data of the inside of the elevator hoistway. The camera unit is slidably attached to the guiding device. The elevator hoistway inspection device further comprises a mounting unit which supports the camera unit near the ceiling of the elevator hoistway and releases the camera unit in response to a release signal to allow the camera unit to freely fall along the guiding device.

According to another embodiment of the invention, a method for inspecting an elevator hoistway is provided which comprises receiving a release signal from an outside device, switching on a camera unit and releasing the camera unit to allow the camera unit to freely fall along a guiding device in response to the release signal, obtaining image data of the inside of the hoistway by the camera unit and storing the image data in a memory of the camera unit as the camera unit falls down and transmitting the image data stored in the memory of the camera unit to the outside device.

### BRIEF DESCRIPTION OF THE DRAWINGS

Fig. 1 is a schematic view of an elevator system including the hoistway inspection device of the present invention.
Fig. 2 is a side view of an imaging device of the hoistway inspection device of Fig. 1.
Figs. 3A and 3B are schematic views showing the operation of a clipper of the imaging device of Fig. 2.
Fig. 4 is a detail view of a camera unit of the imaging device of Fig. 2.
Fig. 5 is a detail view of a mounting unit of the imaging device of Fig. 2.
Fig. 6 is a side view of slider guides of the camera unit of Fig. 4 with parts of the lower slider guide shown in phantom.
Fig. 7 is a top view of a slider guide of Fig. 6 with a cover of the slider guide shown in phantom.
Fig. 8 is a top view of a slider guide of Fig. 6 similar to Fig. 7 with the cover slid to an end.
Fig. 9 shows a second embodiment of the present invention.

The detailed description explains embodiments of the invention, together with advantages and features, by way of example with reference to the drawings.

### DETAILED DESCRIPTION

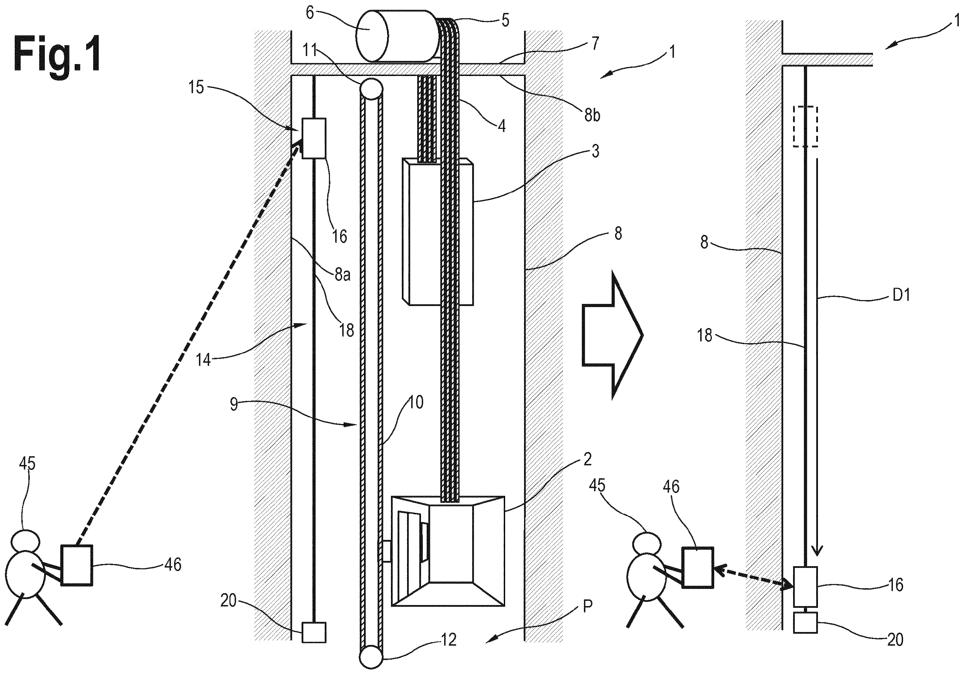

Fig. 1 schematically shows selected portions of an example elevator system 1. An elevator car 2 is connected to a counterweight 3 by a plurality of hoisting ropes 4. The ropes 4 extend over a traction sheave 5 which is driven by a machine 6 which may be positioned in a machine room 7. Traction between the sheave 5 and the ropes 4 drives the car 2 and the counterweight 3 vertically through a hoistway 8. A governor device 9 prevents the elevator car 2 from exceeding a maximum speed. The example governor device 9 includes a governor rope 10 that travels with the elevator car 2. A governor sheave 11 and a tension sheave 12 are located at opposite ends of a loop formed by the governor rope 10. The configuration of the elevator system components may vary from this example in various aspects. In other words, the invention is not necessarily limited to the example elevator system configuration or the specific components of the illustration.

A hoistway inspection device 14 of the present invention is located in the hoistway such that it does not interfere with the elevator car 2, counterweight 3, governor device 9 and other components positioned in the hoistway. The hoistway inspection device 14 includes an imaging device 15 having a camera unit 16 for obtaining image data of the inside of the hoistway 8, a guiding device 18 for guiding the camera unit 16, and a stopper 20. The guiding device 18 is a guide wire extending parallel to a hoistway wall 8a with an upper end connected to the ceiling 8b of the hoistway 8 and a lower end located near the pit P of the hoistway 8. However, the guiding device 18 may comprise a guide rail or any other means for guiding the camera unit 16. The stopper 20 is provided on the lower end of the guide wire 18 and comprises a cushioning material for shock absorption and for also providing the weight to stabilize the guide wire 18.

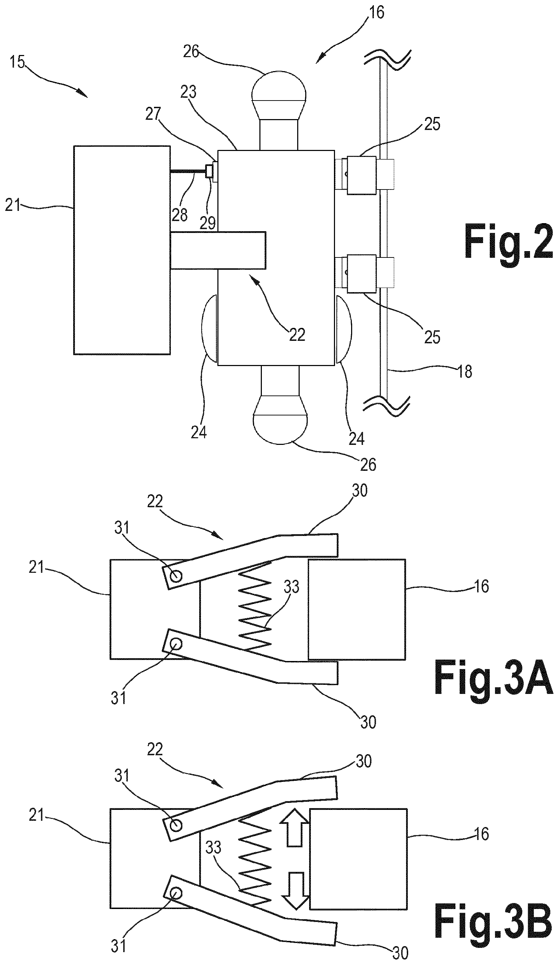

As shown in Fig. 2, the imaging device 15 also includes a mounting unit 21 fixed to the hoistway wall 8a near the ceiling 8b of the hoistway 8. The mounting unit 21 supports the camera unit 16 via a clipper 22 so that the camera unit 16 is positioned between the mounting unit 21 and the guide wire 18. The camera unit 16 comprises a camera frame 23 with 180-degree super-wide-angle lenses 24 on both lateral sides of the camera frame 23. Upper and lower slider guides 25 are fixed to the lateral side of the camera frame 23 facing the guide wire 18. One end of the slider guides 25 are fixed to the camera frame 23 and the other end of the slider guides 25 are slidably attached to the guide wire 18. A light 26 is provided on the top and bottom of the camera frame 23 for illuminating an area within the hoistway 8 above and below the camera unit 16. The light 26 may comprise an LED light. The camera unit 16 also has a contact 27 for receiving power from the mounting unit 21 through line 28 and contact 29.

As shown in Figs. 3A and 3B, the clipper 22 includes a pair of arms 30 each pivotably attached to the mounting unit 21 by a pivot axis 31. When no electric current is provided to the clipper 22, as shown in Fig. 3A, the arms 30 of the clipper 22 are biased inwards such as by a spring 33 to hold the camera unit 16 there between. When an electric current is provided to the clipper 22, such as shown in Fig. 3B, the arms 30 of the clipper 22 are moved outwards such as by a solenoid to release the camera unit 16 and allow the camera unit 16 to fall freely down under its own weight along the guide wire 18.

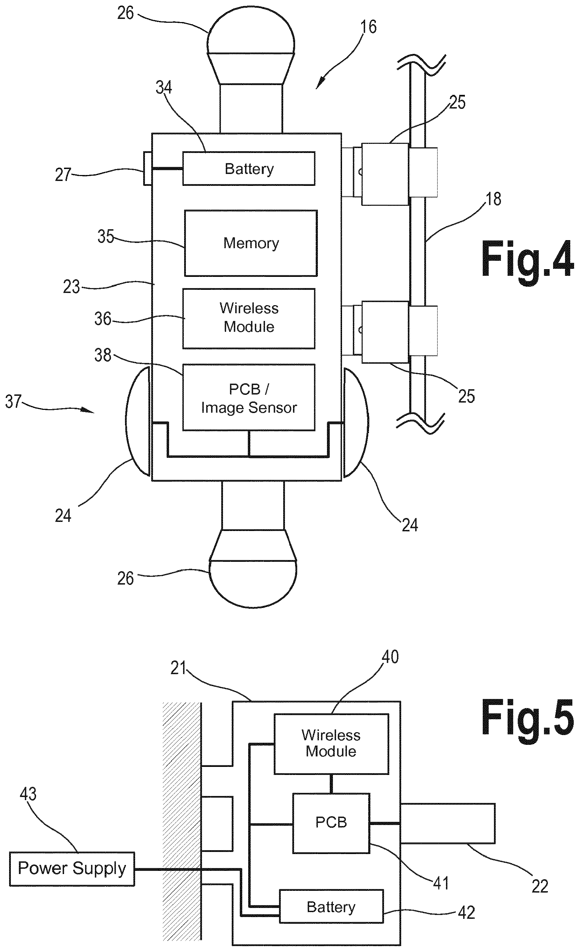

Further details of the camera unit 16 and the mounting unit 21 are shown in Figs. 4 and 5. The camera unit 16 further includes a battery 34 for providing power to the camera unit 16, a memory 35 such as an SD card for storing image data, a wireless module 36 for enabling wireless communication with a mobile device of a mechanic via a Wi-Fi or cellular network, for example, and an omnidirectional camera 37 comprising a Printed Circuit Board (PCB)/image sensor 38 connected to the super-wide-angle lenses 24. One example of such omnidirectional camera 37 is available from Ricoh Company, Ltd. under the brand name Theta.

The mounting unit 21 further includes a wireless module 40 for enabling wireless communication with a mobile device of a mechanic via a Wi-Fi or cellular network, for example, a Printed Circuit Board (PCB) 41 and a battery 42. The battery 42 is connected to a power supply 43 such as an AC 100V power supply and provides power to the mounting unit 21 in the event of a power failure.

Referring again to Fig. 1, upon inspection of the hoistway 8, a mechanic 45 sends a signal from a mobile device 46 to the mounting unit 15 via wireless communication. The mobile device 46 may be a lap top computer, tablet, cell phone, smart phone or any other device which includes a wireless module for enabling wireless communication with the wireless modules 36, 40 of the camera unit 16 and mounting unit 21 via a Wi-Fi or cellular network, for example, and a display. In response to the signal from the mobile device 46, the mounting unit 21 switches on the camera unit 16 and the lights 26 and then provides an electric current to the clipper 22 to release the camera unit 16.

When the camera unit 16 is released, the omnidirectional camera 37 will start obtaining image data of the inside of the hoistway 8 and store the image data in its memory 35. Image data will be continuously obtained while the camera unit 16 slides down the guide wire 18 in direction D1, as shown on the right hand side of Fig. 1. When the camera unit 16 reaches the lower end of the guide wire 18, it is stopped by the stopper 20. The omnidirectional camera 37 will stop recording after a predetermined time, for example, and the stored image data will be automatically provided from the camera unit 16 to the mobile device 46 of the mechanic 45 via the wireless module 36 of the camera unit 16. The mechanic 45 may thereby easily check the inside of the hoistway 8 via the mobile device 46 without having to move to several floors of a building. Since there are two 180-degree super-wide-angle lenses 24 on both sides of the camera unit 16, a 360-degree image data may be obtained.

While the camera unit 16 slides down the guide wire 18, the camera unit 16 will not substantially rotate around the guide wire 18 due to the weight of the camera unit 16. Even if the camera unit 16 rotates to some extent, the mechanic 45 will have no problem checking the hoistway 8 since a 360-degree image of the hoistway 8 is obtained by the omnidirectional camera 37.

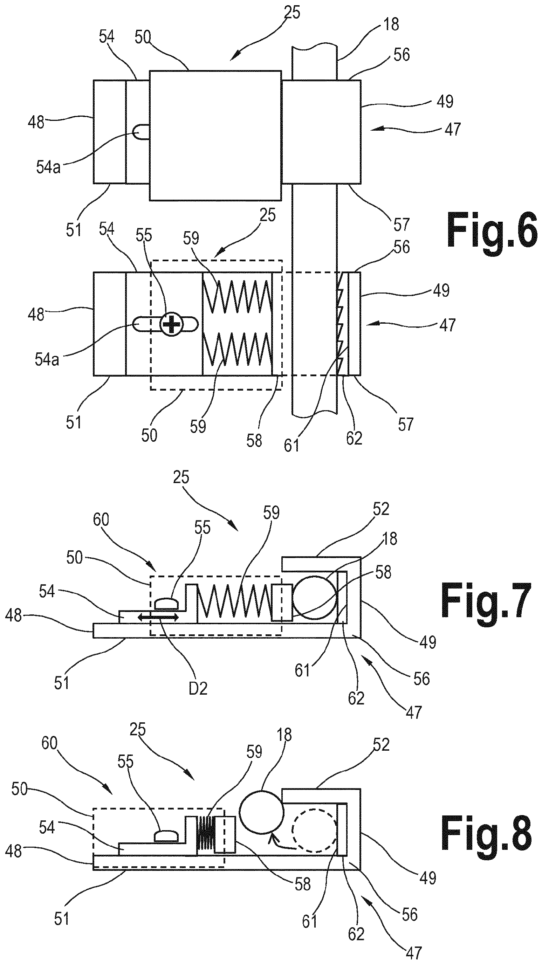

Figs. 6 to 8 show the slider guide 25 in more detail. Fig. 6 shows a side view of the upper and lower slider guides 25 and Figs. 7 and 8 show a top view of a slider guide 25. The slider guide 25 includes a frame 47 with a first end 48 fixed to the camera unit 16 and a second end 49 engaging the guide wire 18. The frame 47 has a generally rectangular cross section with a base plate 51 and a hooked portion 52 extending from one end of the base plate 51 for receiving the guide wire 18. A bracket 54 is attached to the base plate 51 by a bolt 55. The bracket 54 includes an elongate slot 54a for receiving the bolt 55 so that the bracket 54 may be adjusted in the longitudinal direction D2 with respect to the frame 47.

A cover 50 slidably engages the upper and lower sides 56 and 57 of the frame 47 such as by a tongue and groove joint. The cover is 50 shown in phantom in the lower slider guide 25 of Fig. 6 and in Figs. 7 and 8. A vice 58 is fixed on the cover 50 and a pair of springs 59 are connected between the bracket 54 and the vice 58 so that the vice and cover 50 are biased by the springs 59 toward the hooked portion 52 of the frame 47 and against the guide wire 18. The bracket 54, spring 59 and vice 58 form a braking mechanism 60 that applies a frictional braking force on the guide wire 18 when the camera unit 16 freely slides down the guide wire 18.

Such braking force is necessary to slow down the falling speed of the camera unit 16 so that the camera unit 16 falls at a slower speed compared to a completely free fall in order to obtain a clear image of the hoistway 8. The braking force may be adjusted by adjusting the position of the bracket 54. Further, the base 61 of the hooked portion 52 may include a liner 62 having a rough surface so as to enhance the friction between the frame 47 and the guide wire 18.

The hoistway inspection device 14 of the present invention is a one-shot device. After the camera unit 16 reaches the bottom of the hoistway 8 and image data is transmitted to the mobile device 46 of the mechanic 45, the mechanic 45 may easily retrieve the camera unit 16 by opening the hall door of the bottom floor and detaching the camera unit 16 from the guide wire 18. The camera unit 16 is detached from the guide wire 18 by sliding the cover 50 of each slider guide 25 toward the first end 48 of the frame 47, such as shown in Fig. 8. The springs 59 will be compressed and a space will be created between the vice 58 and the hooked portion 52 of the frame 47 for the guide wire 18 to pass through. The cover 50 may be locked in this position such as by a latch.

The mechanic 45 may carry the camera unit 16 to the top floor of the building and reinstall the camera unit 16 in its initial position. The camera unit 16 is attached to the guide wire 18 by placing each slider guide 25 over the guide wire 18 so that the guide wire 18 is received in the hooked portion 52 and the vice 58 is biased against the guide wire 18, the camera frame 23 of the camera unit 16 is clipped between the arms 30 of the clipper 22 and the contact 27 of the camera unit 16 is positioned to come into contact with the contact 29 of the mounting unit 21 so that the imaging device 15 will be ready for the next inspection.

According to the present invention, only a guide wire 18 needs to be installed in the hoistway 8 and the camera unit 16 slides freely down the guide wire 18 under its own weight so that there is no need to drive the camera unit 16 through the hoistway 8 such as by a drive mechanism. This is particularly advantageous in high-rise buildings in which drive members of such drive mechanism would possibly interfere with other components in the hoistway. Further, by using an omnidirectional camera 37, a full view of the hoistway 8 may be obtained by a single camera without the need to move the camera.

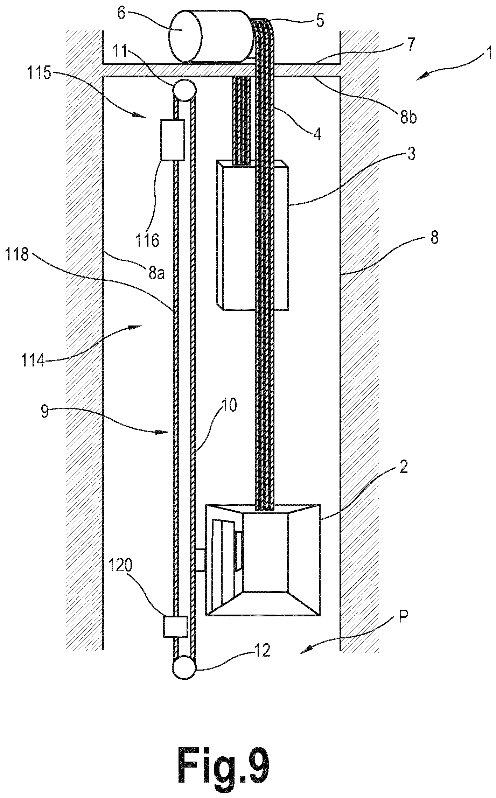

A second embodiment of the hoistway inspection device 114 of the present invention is shown in Fig. 9. In this embodiment, the governor rope 10 is used as the guiding device 118. This enables to eliminate a dedicated guiding device 118 for the hoistway inspection device 114. In this embodiment, the camera unit 116 of the imaging device 115 and the stopper 120 are configured so that they do not engage the governor rope 10 during normal operation of the elevator system 1.

In the above examples, the mechanic 45 sends a signal to the imaging device 15, 115 to start inspection. However, inspection may be automatically started in response to detection of an earthquake, detection of building sway, signal input from a car controller or signal input from a remote monitoring center, for example. Further, image data may be transmitted to a remote monitoring center instead of or in addition to the mobile device 46 of the mechanic 45.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the appended claims. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. An elevator hoistway inspection device (14), comprising:
a guiding device (18) which extends along an
elevator hoistway (8);
a camera unit (16) configured for obtaining image data of the inside of the elevator hoistway (8), the camera unit slidably attached to the guiding device (18); and
**characterized in that** the elevator hoistway inspection device (14) further comprises:
a mounting unit (21) which supports the camera unit (16) near the ceiling (8b) of the elevator hoistway (8) and releases the camera unit (16) in response to a release signal to allow the camera unit (16) to freely fall along the guiding device (18).

2. The elevator hoistway inspection device (14) of claim 1, wherein the camera unit (16) further comprises a slider guide (25) slidably attached to the guiding device (18), the slider guide including a braking mechanism (60) for slowing down the falling speed of the camera unit (16).

3. The elevator hoistway inspection device (14) of claim 2, wherein the braking mechanism (60) is a frictional braking mechanism.

4. The elevator hoistway inspection device (14) of claim 1, 2 or 3, wherein the camera unit (16) further comprises an omnidirectional camera (37).

5. The elevator hoistway inspection device (14) of any preceding claim, wherein the camera unit (16) further comprises a memory (35) for storing image data obtained by the camera unit (16) and a wireless module (36) for communicating image data to an outside device (46).

6. The elevator hoistway inspection device (14) of any preceding claim, wherein the camera unit (16) further comprises a light (26).

7. The elevator hoistway inspection device (14) of any preceding claim, wherein the mounting unit (21) comprises a wireless module (40) for receiving the release signal from an outside device (46) and a clipper (22) which holds the camera unit (16) and releases the camera unit (16) in response to the release signal.

8. The elevator hoistway inspection device (14) of any preceding claim, wherein the guiding device (18) is a guide wire and the elevator hoistway inspection device (14) further comprises a stopper (20) provided on the lower end of the guide wire (18).

9. The elevator hoistway inspection device of any of claims 1 to 7, wherein the guiding device (18) is a governor rope (10).

10. A method for inspecting an elevator hoistway (8), comprising:
receiving a release signal from an outside device (46);
switching on a camera unit (16) and releasing the camera unit (16) to allow the camera unit (16) to freely fall along a guiding device (18) in response to the release signal;
obtaining image data of the inside of the elevator hoistway (8) by the camera unit (16) and storing the image data in a memory (35) of the camera unit (16) as the camera unit (16) falls down; and
transmitting the image data stored in the memory (35) of the camera unit (16) to the outside device (46).

11. A method for inspecting an elevator hoistway (8) of claim 10, further comprising applying a brake to the camera unit (16) while the camera unit (16) freely falls along the guiding device (18) so that the falling speed of the camera unit (16) is slowed down.

12. A method for inspecting an elevator hoistway (8) of claim 10 or 11, wherein obtaining image data of the inside of the elevator hoistway (8) includes obtaining 360-degree image data of the inside of the elevator hoistway (8).

13. A method for inspecting an elevator hoistway (8) of claim 10, 11 or 12, further comprising switching on a light (26) of the camera unit (16) upon switching on the camera unit (16).

14. A method for inspecting an elevator hoistway (8) of any of claims 10 to 13, wherein receiving the release signal and transmitting the image data is performed by wireless communication.

## Patentansprüche

1. Aufzugsschachtinspektionsvorrichtung (14), umfassend:
eine Führungsvorrichtung (18), die sich entlang eines Aufzugsschachts (8) erstreckt;
eine Kameraeinheit (16), die zur Gewinnung von Bilddaten von dem Inneren des Aufzugsschachts (8) konfiguriert ist, wobei die Kameraeinheit verschiebbar an der Führungsvorrichtung (18) befestigt ist; und
**dadurch gekennzeichnet, dass** die Aufzugsschachtinspektionsvorrichtung (14) ferner Folgendes umfasst:
eine Montageeinheit (21), die die Kameraeinheit (16) in der Nähe der Decke (8b) des Aufzugsschachts (8) stützt und die Kameraeinheit (16) als Reaktion auf ein Freigabesignal freigibt, um es der Kameraeinheit (16) zu ermöglichen, entlang der Führungsvorrichtung (18) frei zu fallen.

2. Aufzugsschachtinspektionsvorrichtung (14) nach Anspruch 1, wobei die Kameraeinheit (16) ferner eine Schieberführung (25) umfasst, die verschiebbar an der Führungsvorrichtung (18) befestigt ist, wobei die Schieberführung einen Bremsmechanismus (60) zur Verlangsamung der Fallgeschwindigkeit der Kameraeinheit (16) beinhaltet.

3. Aufzugsschachtinspektionsvorrichtung (14) nach Anspruch 2, wobei der Bremsmechanismus (60) ein Reibungsbremsmechanismus ist.

4. Aufzugsschachtinspektionsvorrichtung (14) nach Anspruch 1, 2 oder 3, wobei die Kameraeinheit (16) ferner eine omnidirektionale Kamera (37) umfasst.

5. Aufzugsschachtinspektionsvorrichtung (14) nach einem der vorhergehenden Ansprüche, wobei die Kameraeinheit (16) ferner einen Speicher (35) zum Speichern von Bilddaten, die durch die Kameraeinheit (16) erhalten werden, und ein drahtloses Modul (36) zum Kommunizieren von Bilddaten an eine Außenvorrichtung (46) umfasst.

6. Aufzugsschachtinspektionsvorrichtung (14) nach einem der vorhergehenden Ansprüche, wobei die Kameraeinheit (16) ferner ein Licht (26) umfasst.

7. Aufzugsschachtinspektionsvorrichtung (14) nach einem der vorhergehenden Ansprüche, wobei die Montageeinheit (21) ein drahtloses Modul (40) zum Empfangen des Freigabesignals von einer Außenvorrichtung (46) und eine Klippvorrichtung (22) umfasst, die die Kameraeinheit (16) hält und die Kameraeinheit (16) als Reaktion auf das Freigabesignal freigibt.

8. Aufzugsschachtinspektionsvorrichtung (14) nach einem der vorhergehenden Ansprüche, wobei die Führungsvorrichtung (18) ein Führungsdraht ist und die Aufzugsschachtinspektionsvorrichtung (14) ferner eine Anhaltevorrichtung (20) umfasst, die an dem unteren Ende des Führungsdrahts (18) bereitgestellt ist.

9. Aufzugsschachtinspektionsvorrichtung nach einem der Ansprüche 1 bis 7, wobei die Führungsvorrichtung (18) ein Begrenzerseil (10) ist.

10. Verfahren zur Inspektion eines Aufzugsschachts (8), umfassend:
Empfangen eines Freigabesignals von einer Außenvorrichtung (46); Einschalten einer Kameraeinheit (16) und Freigeben der Kameraeinheit (16), um es der Kameraeinheit (16) zu ermöglichen, als Reaktion auf das Freigabesignal frei entlang einer Führungsvorrichtung (18) zu fallen;
Erhalten von Bilddaten vom Inneren des Aufzugsschachts (8) durch die Kameraeinheit (16) und Speichern der Bilddaten in einem Speicher (35) der Kameraeinheit (16), während die Kameraeinheit (16) herabfällt; und
Übertragen der Bilddaten, die im Speicher (35) der Kameraeinheit (16) gespeichert sind, an die Außenvorrichtung (46).

11. Verfahren zur Inspektion eines Aufzugsschachts (8) nach Anspruch 10, ferner umfassend Anlegen einer Bremse an die Kameraeinheit (16), während die Kameraeinheit (16) derart entlang der Führungsvorrichtung (18) fällt, dass die Fallgeschwindigkeit der Kameraeinheit (16) verlangsamt wird.

12. Verfahren zur Inspektion eines Aufzugsschachts (8) nach Anspruch 10 oder 11, wobei ein Erhalten von Bilddaten vom Inneren des Aufzugsschachts (8) das Erhalten von 360-Grad-Bilddaten vom Inneren des Aufzugsschachts (8) beinhaltet.

13. Verfahren zur Inspektion eines Aufzugsschachts (8) nach Anspruch 10, 11 oder 12, ferner umfassend das Einschalten eines Lichts (26) der Kameraeinheit (16) beim Einschalten der Kameraeinheit (16).

14. Verfahren zur Inspektion eines Aufzugsschachts (8) nach einem der Ansprüche 10 bis 13, wobei das Empfangen des Freigabesignals und das Übertragen der Bilddaten durch drahtlose Kommunikation durchgeführt wird.

## Revendications

1. Dispositif d'inspection de cage d'ascenseur (14), comprenant :
un dispositif de guidage (18) qui s'étend le long d'une cage d'ascenseur (8) ;
une unité de caméra (16) configurée pour obtenir des données d'image de l'intérieur de la cage d'ascenseur (8), l'unité de caméra étant fixée de manière coulissante au dispositif de guidage (18) ; et
**caractérisé en ce que** le dispositif d'inspection de cage d'ascenseur (14) comprend en outre :
une unité de montage (21) qui supporte l'unité de caméra (16) près du plafond (8b) de la cage d'ascenseur (8) et libère l'unité de caméra (16) en réponse à un signal de libération pour permettre à l'unité de caméra (16) de chuter librement le long du dispositif de guidage (18).

2. Dispositif d'inspection de cage d'ascenseur (14) selon la revendication 1, dans lequel l'unité de caméra (16) comprend en outre un guide de coulisse (25) fixé de manière coulissante au dispositif de guidage (18), le guide de coulisse comportant un mécanisme de freinage (60) pour ralentir la vitesse de chute de l'unité de caméra (16).

3. Dispositif d'inspection de cage d'ascenseur (14) selon la revendication 2, dans lequel le mécanisme de freinage (60) est un mécanisme de freinage par friction.

4. Dispositif d'inspection de cage d'ascenseur (14) selon la revendication 1, 2 ou 3, dans lequel l'unité de caméra (16) comprend en outre une caméra omnidirectionnelle (37).

5. Dispositif d'inspection de cage d'ascenseur (14) selon une quelconque revendication précédente, dans lequel l'unité de caméra (16) comprend en outre une mémoire (35) pour stocker des données d'image obtenues par l'unité de caméra (16) et un module sans fil (36) pour communiquer des données d'image à un dispositif extérieur (46) .

6. Dispositif d'inspection de cage d'ascenseur (14) selon une quelconque revendication précédente, dans lequel l'unité de caméra (16) comprend en outre une lumière (26).

7. Dispositif d'inspection de cage d'ascenseur (14) selon une quelconque revendication précédente, dans lequel l'unité de montage (21) comprend un module sans fil (40) pour recevoir le signal de libération depuis un dispositif extérieur (46) et un dispositif d'attache (22) qui maintient l'unité de caméra (16) et libère l'unité de caméra (16) en réponse au signal de libération.

8. Dispositif d'inspection de cage d'ascenseur (14) selon une quelconque revendication précédente, dans lequel le dispositif de guidage (18) est un fil de guidage et le dispositif d'inspection de cage d'ascenseur (14) comprend en outre une butée (20) prévue sur l'extrémité inférieure du fil de guidage (18).

9. Dispositif d'inspection de cage d'ascenseur selon l'une quelconque des revendications 1 à 7, dans lequel le dispositif de guidage (18) est un câble régulateur (10).

10. Procédé d'inspection d'une cage d'ascenseur (8), comprenant :
la réception d'un signal de libération depuis un dispositif extérieur (46) ;
la mise sous tension d'une unité de caméra (16) et la libération de l'unité de caméra (16) pour permettre à l'unité de caméra (16) de chuter librement le long d'un dispositif de guidage (18) en réponse au signal de libération ;
l'obtention de données d'image de l'intérieur de la cage d'ascenseur (8) par l'unité de caméra (16) et le stockage des données d'image dans une mémoire (35) de l'unité de caméra (16) lorsque l'unité de caméra (16) chute ; et
la transmission des données d'image stockées dans la mémoire (35) de l'unité de caméra (16) au dispositif extérieur (46).

11. Procédé d'inspection d'une cage d'ascenseur (8) selon la revendication 10, comprenant en outre l'application d'un frein à l'unité de caméra (16) tandis que l'unité de caméra (16) chute librement le long du dispositif de guidage (18) de sorte que la vitesse de chute de l'unité de caméra (16) est ralentie.

12. Procédé d'inspection d'une cage d'ascenseur (8) selon la revendication 10 ou 11, dans lequel l'obtention de données d'image de l'intérieur de la cage d'ascenseur (8) comporte l'obtention de données d'image à 360 degrés de l'intérieur de la cage d'ascenseur (8).

13. Procédé d'inspection d'une cage d'ascenseur (8) selon la revendication 10, 11 ou 12, comprenant en outre l'allumage d'une lumière (26) de l'unité de caméra (16) lors de la mise sous tension de l'unité de caméra (16).

14. Procédé d'inspection d'une cage d'ascenseur (8) selon l'une quelconque des revendications 10 à 13, dans lequel la réception du signal de libération et la transmission des données d'image sont effectuées par communication sans fil.
